# EUROPÄISCHE PATENTANMELDUNG

(11) **EP 0 812 071 A2**
(43) Veröffentlichungstag der Anmeldung: **10.12.1997**
(21) Anmeldenummer: 97109209.3
(22) Anmeldetag: 05.06.1997
(51) Int. Cl.: H04B 1/74

(54) **System zur Übertragung von Informationen**

(30) Priorität: 05.06.1996 DE 19622657
(71) Anmelder: SIEMENS AKTIENGESELLSCHAFT, 80333 München (DE)
(72) Erfinder: Meier, Roman, Dipl.-Ing.(FH), 82041 Oberhaching (DE); Molin, Manfred, Dipl.-Ing.(FH), 81369 München (DE)

(57) **Zusammenfassung**

Das System ist mit mehreren Betriebskanälen und einem Ersatzkanal ausgestattet sowie mit einer sendeseitigen Ersatzschalteinrichtung und einem empfangsseitigen Umschalter zur bitfehlerfreien Umschaltung. Die Ersatzschalteinrichtung besteht aus zwei unabhängig voneinander arbeitenden Leitungswählern und jeweils einer nachfolgenden Rahmensynchronisationseinrichtung für das genormte gerahmte Datensignal am Schaltungseingang, einer die Leitungswähler einstellenden Ersatzschaltungs-Steuereinheit und zwei den Rahmensynchronisationseinrichtungen nachgeschalteten elastischen Speichern. Die Speicher sind ausgangsseitig an einen Hitless-Umschalter angeschlossen; Speicher und Umschalter werden von einer weiteren Steuerung kontrolliert.

## Beschreibung

Die Erfindung bezieht sich auf ein System zur Übertragung von Informationen auf elektrischem Wege mit hoher Sicherheit, insbesondere Richtfunksystem, mit einer Ersatzschalteinrichtung für SDH-Betriebskanäle (SDH = Synchrone Digitalhierarchie), bei der sendeseitig ein genormtes gerahmtes Datensignal (z.B. STM-N-Signal) durch einen Verzweiger über den Betriebskanal und bei einer Ersatzschaltanforderung parallel über einen Ersatzkanal geführt wird und empfangsseitig eine Ersatzschaltung bitfehlerfrei mit einem Umschalter abgeschlossen wird. Ein solches System ist beispielsweise in dem Aufsatz: 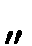 Digital Protecting Switching (DPS) for Radio Systems in a Synchronous Digital Network" von H. Barth, J. Meyer, M. Molin, erschienen in 3rd ECCR, Paris, Dec. 17-20, 1991, Seiten 75-82 beschrieben.

In Richtfunk-Übertragungssystemen werden schnelle Ersatzschalteinrichtungen eingesetzt, um die Verfügbarkeit des Übertragungsweges zu erhöhen. Hierbei werden für mehrere Betriebskanäle (OP = Operation Channel) üblicherweise ein oder zwei Ersatzkanäle (ST = Standby Channel) bereitgestellt.

Neben einem wirksamen Geräteschutz bieten Richtfunk- Ersatzschalteinrichtungen bei Fadingereignissen eine Verbesserung der Übertragungsqualität degradierter Betriebskanäle. Dabei ist wesentlich, daß für einen so gestörten Betriebskanal die Ersatzschaltung bitfehlerfrei (hitless) und schnell ausgeführt wird.

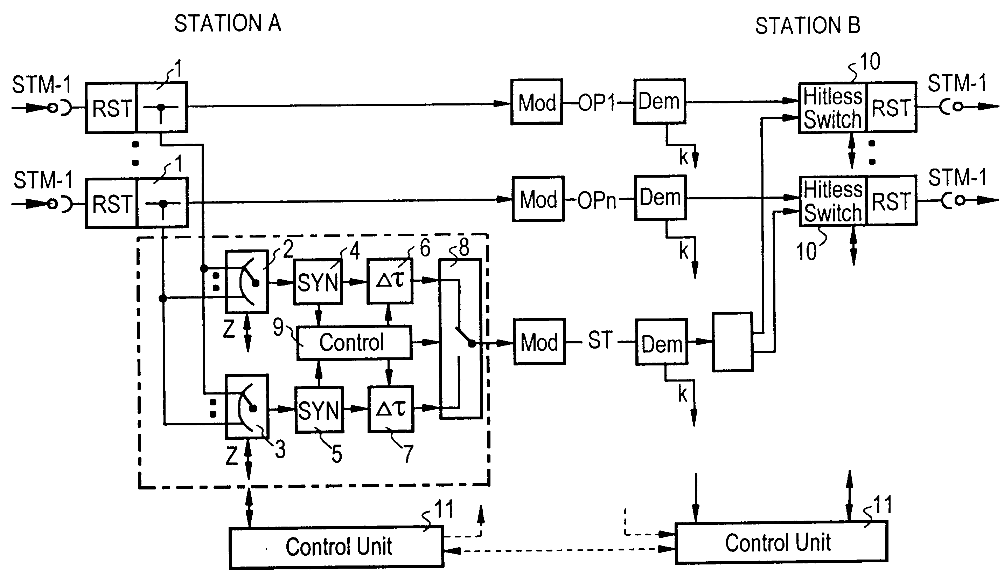

Die Ersatzschalttechnik ist auch für moderne Systeme der synchronen Digitalhierarchie (SDH) von großer Bedeutung. In solchen SDH-Systemen werden neben den Schalthandlungen für die Ersatzschaltung auch die relevanten Funktionen eines Multiplex-Abschnittes MS (Multiplex-Section) ausgeführt. Es werden dabei die Multiplex-Section-Termination (MST), die Regenerator-Section-Termination (RST) und die Section Adaption (SA) vorgenommen. Darüber hinaus erfolgt mit einer zentralen Takteinrichtung (SETS = Synchronous Equipment Timing Source) die Frequenz- und gegebenenfalls Rahmensynchronisation aller STM-1-Signale. In der Regel entspricht einem Ersatzschaltabschnitt eine MS. In dem ITU-R Document 9/1017-E, 12. July 1995, Figur 25 sind verschiedene Konzepte angegeben, bei denen beispielsweise die Schaltmittel der Ersatzschaltung außerhalb der MST und SA liegen (Typ A), oder diese innerhalb der MST und SA eingebunden sind (Typ C).

Insbesondere sind, wie in der erstgenannten Literaturstelle angegeben, beim Typ C auf der Sendeseite Vorkehrungen für eine schnelle Ersatzschaltung zu treffen. Eine Ersatzschaltungsanforderung ist mit einer Leitungswählereinstellung verbunden. Um dabei die Rahmensynchronität im Ersatzkanal-Übertragungsweg aufrechtzuerhalten, werden mit einem Systemtakt TO zusätzlich die Rahmenkennwörter der STM-1-Signale aller Betriebskanäle zeitlich zueinander synchronisiert und darüber hinaus mögliche Imperfektionen dieser Rahmensynchronisation vor dem Ersatzkanal-Modulator durch einen elastischen Speicher kompensiert. Beim Typ A sind für eine schnelle Ersatzschaltung keine besonderen Vorkehrungen vorzusehen.

Zunehmend wird von Netzbetreibern die Anforderung gestellt, die Richtfunk-Ersatzschalteinrichtungen ohne Multiplex-Section-Termination (MST) und Section Adaption (SA) auszuführen. Diese Reduzierung auf eine reine Regeneratorfunktion RS (Regenerator Section) führt u.a. nicht nur zum Verzicht des Systemtakts TO, sondern ganz generell zum Problem einer schnellen Ersatzschaltung.

Der Erfindung liegt die Aufgabe zugrunde, eine Lösung anzugeben für eine einfache Nutzung zur sendeseitigen Rahmensynchronisation im Ersatzkanal und somit für eine schnelle Ersatzschalteinrichtung nur mit Regeneratorfunktion.

Diese Aufgabe wird gemäß der Erfindung gelöst durch eine sendeseitige Einrichtung für die Ersatzschaltung aus zwei unabhängig voneinander arbeitenden Leitungswählern und jeweils einer nachfolgenden Rahmensynchronisationseinrichtung für das genormte gerahmte Datensignal, einer die Leitungswähler einstellenden Ersatzschaltungs-Steuereinheit und zwei den Rahmensynchronisationseinrichtungen nachgeschalteten, ausgangsseitig an einen Hitless-Umschalter angeschlosssenen elastischen Speichern, die durch eine zugleich den Umschalter steuernde Steuerung kontrolliert werden.

Beim erfindungsgemäßen System bleibt mit der Implementierung der Hitless-Schalteinrichtung am Eingang des Ersatzkanals die Synchronisation erhalten. Dadurch wird sichergestellt, daß zum Zeitpunkt der Umschaltung die Rahmenkennwörter beider Datensignale exakt in die gleiche Phasenlage gestellt sind. Es wird also verhindert, daß temporär die Synchronisation verlorengeht, wenn am Eingang eine Umschaltung zwischen zwei Datensignalen erfolgt, die nicht rahmensynchron sind, wie dies geschehen kann bei der Synchronisation von Datenübertragungseinrichtungen durch ein kontinuierliches periodisches Rahmenkennwort des Datenstromes.

Vorteilhafte Ausgestaltungen und Weiterbildungen des Erfindungsgegenstandes sind in den Unteransprüchen angegeben.

Nachstehend wird die Erfindung anhand eines in der Zeichnung dargestellten Ausführungsbeispiels näher erläutert.

Die Figur zeigt ein Ausführungsbeispiel für eine schnelle Ersatzschaltung nur mit RS-Funktion, bei der bei einem Wechsel des sendeseitigen Eingangssignals des gemeinsamen Ersatzkanals alle zugehörigen Modems im eingeschwungenen Zustand bleiben. Bei der Ersatzschalteinrichtung für SDH-Betriebskanäle wird das STM-1-Signal sendeseitig (Station A) durch einen Verzweiger 1 über einen Betriebskanal (OP-Weg) und bei einer Ersatzschaltanforderung parallel über den Ersatzkanal ST geführt. Auf der Empfangsseite (Station B) wird eine Ersatzschaltung z.B. aufgrund von Qualitätsminderung bitfehlerfrei (hitless) mit einem Umschalter 10 abgeschlossen. Diese Umschaltung mit dem Umschalter 10 wird nur dann durchgeführt, wenn dabei auch STM-1-Rahmensynchronismus der über die Betriebskanäle und den Ersatzkanal übertragenen Signale gemeldet wird. Auf eine detaillierte Beschreibung der Funktionsweise der SDH-Ersatzschaltung, die in der eingangs genannten Literaturstelle ausführlich beschrieben ist, wird hier verzichtet. Im Zusammenhang mit der vorliegenden Erfindung wird der gestrichelt umrandete Teil der Figur näher beschrieben, der den sendeseitigen Teil der Ersatzschaltung für einen Ersatzkanal beinhaltet.

Wesentliches Merkmal dieser umrahmten Einrichtung E ist, daß das über den Ersatzkanal zu führende STM-1-Signal hinter dem Signalverzweiger 1 praktisch einem Hitless-Umschalter ählich dem Hitless-Umschalter 10 auf der Empfangsseite zugeführt wird. Diese Funktionseinheit besteht aus zwei unabhängig voneinander arbeitenden Leitungswählern 2 und 3, die an die Signalverzweiger 1 im Übertragungsweg der Betriebskanäle OP1 bis OPn angeschlossen sind, und jeweils einer mit der Mittelanzapfung der Leitungswähler 2, 3 verbundenen STM-1-Rahmen-Synchronisationseinrichtung 4 und 5. Die Leitungswähler 2 und 3 werden von einer Ersatzschaltungs-Steuereinheit 11 eingestellt. Den Synchronisationseinrichtungen 4 und 5 ist jeweils ein elastischer Speicher 6 bzw. 7 für den Längenausgleich nachgeschaltet, die ausgangsseitig mit den Umschaltkontakten eines nachfolgenden Umschalters 8 (Hitless Switch) verbunden sind. Die elastischen Speicher 6 und 7 sowie der Umschalter 8 werden durch eine Steuerung 9 kontrolliert. Diese erhält die Rahmenkennwortinformation von den STM-1-Rahmen-Synchronisationseinrichtungen 4 und 5 für die Längeneinstellung des Speichers 6 bzw. 7.

Im umgestörten Betriebszustand wird sendeseitig auf der Station A immer dem Ersatzkanal ST ein Betriebskanal OP parallelgeschaltet. In der Figur ist dieser Fall für das Signal des Betriebskanals OP1 dargestellt; d.h. alle Modems im Ersatzkanal-Weg sind auf das STM-1-Rahmensignal des Übertragungskanals OP1 synchronisiert.

Im gestörten Betriebszustand für z.B. den Übertragungskanal OPn wird auf der Empfangsseite des Schaltabschnittes (Station B) ein Kriterium K generiert. Der erforderliche Schaltvorgang für den Leitungswähler 3 auf Station A ist abhängig vom Befehl Z, der per Telegramm von der Ersatzschalter-Steuerung 11 von Station B nach Station A übermittelt wird. Wesentlich für eine erwünschte schnelle Ersatzschaltung ist, daß die Steuerung 9 die Längeneinstellung, gegeben durch den elastischen Speicher 7 so steuert, daß die Rahmenkennwörter beider STM-1-Signale an den zwei Eingängen des Umschalters 8 zeitlich exakt übereinstimmen. Somit bleiben bei der Umschaltung des Umschalters 8 alle Modems des Ersatzkanals im eingeschwungenen Zustand. Es wird keine Zeit für eine neue Synchronisation der Modems benötigt. Der Längenausgleichsbereich der elastischen Speicher 6 und 7 ist dabei so groß zu gestalten, daß er die volle Längendifferenz zwischen den zu schützenden Betriebskanälen ausgleichen kann. Nach Umschaltung des Umschalters 8 wird die Stellung des Leitungswählers 3 von Station A nach Station B quittiert. Nach üblichen Prüfkriterien wird dann auf Station B die Umschaltung des Schalters 10 vollzogen.

Wird im Ruhezustand erneut eine Ersatzschaltanforderung eines Betriebskanals gestellt, so wird durch den Schaltbefehl Z dann der Leitungswähler 2 angesteuert, die elektrische Länge des Speichers 6 durch die Steuerung 9 eingestellt und der Umschalter 8 in die obere Position zurückgeführt, ohne daß die Rahmensynchronisation der Ersatzkanal-Modems verlorengeht.

Entsprechende Einrichtungen - wie in der Figur dargestellt und vorstehend beschrieben für die Übertragungsrichtung von Station A nach Station B - sind auch für die Gegenrichtung von Station B nach Station A vorgesehen. Prinzipiell kann in der Anordnung eine Ersatzkanaldurchschaltung implementiert werden.

## Patentansprüche

1. System zur Übertragung von Informationen auf elektrischem Wege mit hoher Sicherheit, insbesondere Richtfunksystem mit einer Ersatzschalteinrichtung für SDH-Betriebskanäle (SDH = Synchrone Digitalhierarchie), bei der sendeseitig ein genormtes gerahmtes Datensignal (z.B. STM-N-Signal) durch einen Verzweiger über den Betriebskanal (OP = Operation Channel) und bei einer Ersatzschaltanforderung parallel über einen Ersatzkanal (ST = Standby Channel) geführt wird und empfangsseitig eine Ersatzschaltung bitfehlerfrei (hitless) mit einem Umschalter abgeschlossen wird, **gekennzeichnet** durch eine sendeseitige Einrichtung für die Ersatzschaltung aus zwei unabhängig voneinander arbeitenden Leitungswählern (2, 3) und jeweils einer nachfolgenden Rahmensynchronisationseinrichtung (4, 5) für das genormte gerahmte Datensignal, einer die Leitungswähler einstellenden Ersatzschaltungs-Steuereinheit (11) und zwei den Rahmensynchronisationseinrichtungen (4, 5) nachgeschalteten, ausgangsseitig an einen Hitless-Umschalter (8) angeschlosssenen elastischen Speichern (6, 7), die durch eine zugleich den Umschalter (8) steuernde Steuerung (9) kontrolliert werden.

2. System nach Anspruch 1, dadurch **gekennzeichnet**, daß im ungestörten Betriebszustand sendeseitig (Station A) immer dem Ersatzkanal (ST) ein Betriebskanal (OP) parallelgeschaltet ist.

3. System nach Anspruch 1, dadurch **gekennzeichnet**, daß im gestörten Betriebszustand auf der Empfangsseite des Schaltabschnittes (Station B) ein Kriterium (K) generiert wird, durch das mittels eines daraus initialisierten Befehls (Z) der erforderliche Schaltvorgang für den betreffenden Leitungswähler (2 bzw. 3) auf der Sendeseite erfolgt.

4. System nach Anspruch 3, dadurch **gekennzeichnet**, daß der Befehl (Z) per Telegramm von der Ersatzschaltungs-Steuerung (11) von der Empfangsseite (Station B) nach der Sendeseite (Station A) übermittelt wird.

5. System nach einem der Ansprüche 1 bis 4, dadurch **gekennzeichnet**, daß die Steuerung (9) die durch die elastischen Speicher (6, 7) gegebene Längeneinstellung so steuert, daß die Rahmenkennwörter beider STM-1-Signale an den zwei Eingängen des Umschalters (8) zeitlich exakt übereinstimmen.

6. System nach einem oder mehreren der Ansprüche 1 bis 5, dadurch **gekennzeichnet**, daß der Längenausgleichsbereich der elastischen Speicher (6, 7) so groß ausgebildet ist, daß er die volle Längendifferenz zwischen den zu schützenden Betriebskanälen (OP) ausgleichen kann.

7. System nach einem oder mehreren der Ansprüche 1 bis 6, dadurch **gekennzeichnet**, daß nach Umschaltung des Umschalters (8) die Stellung des betreffenden Leistungswählers (2 bzw. 3) von der Sendeseite zur Empfangsseite quittiert und nach entsprechenden Prüfkriterien die Umschaltung des Umschalters (10) auf der Empfangsseite erfolgt.

8. System nach einem oder mehreren der vorhergehenden Ansprüche, dadurch **gekennzeichnet**, daß im Ruhezustand bei erneuter Ersatzschaltanforderung eines Betriebskanals der zweite Leitungswähler (3 bzw. 2) durch den Schaltbefehl (Z) angesteuert, die elektrische Länge des diesem Leitungswähler nachgeschalteten elastischen Speichers durch die Steuerung (9) eingestellt und der Umschalter (8) der Sendeseite in die vorherige Position zurückgeführt wird ohne Verlust der Rahmensynchronisation der Ersatzkanal-Modems.

9. System nach einem oder mehreren der vorhergehenden Ansprüche, **gekennzeichnet** durch eine Implementierung einer Ersatzkanaldurchschaltung in der Anordnung.
